# EUROPEAN PATENT SPECIFICATION

(11) **EP 0 676 781 B1**
(45) Date of publication and mention of the grant of the patent: **13.01.1999**
(21) Application number: 95302310.8
(22) Date of filing: 06.04.1995
(51) Int. Cl.: H01H 13/70, G06F 3/033

(54) **portable electronic device**
Tragbares elektronisches Gerät
Dispositif électronique portable

(30) Priority: 08.04.1994 FI 941629
(43) Date of publication of application: 11.10.1995
(73) Proprietor: NOKIA MOBILE PHONES LTD., 24101 Salo (FI)
(72) Inventor: Mäkelä, Jarmo, SF-33250 Tampere (FI); Lehtonen, Arto, SF-33730 Tampere (FI); Paajanen, Reijo, SF-33820 Tampere (FI)
(74) Representative: Haws, Helen Louise

(56) References cited:
- EP-A- 0 372 592
- EP-A- 0 421 025
- DE-U- 1 861 569
- FR-A- 1 320 595
- US-A- 3 609 758
- US-A- 3 711 852

## Description

The invention relates to a portable electronic device, particularly mobile phones.

Problems occur in the development of small-sized, portable data processing and data transmission devices, such as notebook computers or mobile phones in implementing small, flexible, versatile and user-friendly user interfaces. It is difficult to place in these devices, due to their small size, a keyboard which operates by normal finger pressing.

User interfaces based on touch screen displays are one solution to the problem. In these both the input and output elements of the user interface are placed in the display screen of the device as separate stacked layers, resulting in a space saving solution. The layer of the display which serves as the output element, is implemented generally by LCD (Liquid Crystal Display) techniques. The input element is formed of a transparent digitising layer on top of the LCD layer. The digitising layer contains for example a number of digitising points arranged in the form of a matrix, which when touched, form a proportional physical response at the point touched which is converted into an electrical signal and further interpreted as digital data in the control unit of the display. The recognition of the touched point in the digitising layer can be realised using different known techniques which are based, for example, on the absorption of surface waves in the touch point, on infrared transmission and reception, on the changing of capacitance and the changing in frequency on alternating voltages fed to the layer, on the changing of the resistance of the digitising layer in the touch point, or on the contact pressure detected by a strain gauge or a piezoelectric pressure sensor.

One small device which implements a touch screen display is a PDA or Personal Digital Assistant a specific group of which are known as pen computers. The pen computer is generally a small-size microcomputer which fits easily in the hand and does not require a conventional keyboard, instead the data is fed in by writing, or by activating keys on a touch screen display of the device using a special stylus. In commercial pen computers currently available both of these data feeding methods are generally viable. When writing directly on the touch screen display, the characters are usually recognised by a handwriting recognition program and converted into standard codes representing the characters. The handwriting recognition is intended to be versatile, and in the more advanced devices the handwriting recognition programs read both block lettering and normal handwriting. However, the handwriting interpretations carried out by the programs are not completely reliable, and as such alternative ways to input data are usually included in such devices.

In pen computers the handwriting input is usually supported by a virtual or soft keyboard, containing normal alphanumeric characters as well as special characters, which is displayed onto the touch screen display when desired. The size of the virtual keyboard is typically a few square centimetres. The keys of the virtual keyboard are operated using a stylus, such as a pen, by pressing onto the area corresponding to the key on the touch screen display.

One advantage in the application of the touch screen display in devices like the one described above is that a normal keyboard which would otherwise take up space on the device can be replaced by a virtual keyboard as part of the touch screen display. However, there exists a practical problem in that the space occupied by the virtual keyboard on the display screen of the device is large, leaving less space for the displaying of, for example, input text data. In addition, the placing of the virtual keyboard in the correct position on the display in different situations, when activating the virtual keyboard, is problematic. The keyboard can cover a major part of the text on the screen, which should ideally be seen in order to input the data. As a result of this the user has to either move the text on the screen or change the place of the keyboard on the screen, assuming these procedures are possible. For an inexperienced user, even the activation of the virtual keyboard can be difficult because it may require the pressing of a fairly long key sequence using separate function keys. Moreover, any pressing of keys on the touch screen display requires particular accuracy as the smooth surface of the display is slippery under the tip of the stylus and the keys are often close to one other, resulting in the number of faulty presses being considerable compared with the input of data using a normal keyboard.

US 3,609,758 discloses a keyboard entry device comprising a keyboard and an actuator. Data is entered into the device by inserting the actuator into selected openings in the front cover of the keyboard to activate a switch element at the bottom of the opening and an actuator switch of the actuator.

According to the present invention there is provided a portable electronic device comprising a touch screen display with a digitising layer and a display layer, a keyboard for entering data into the portable electronic device, said keyboard defining a top surface comprising a plurality of recesses, and including a key-like element disposed at the bottom of each recess, which can be actuated by a stylus (14) presented into the recess, wherein the wall of each recess is shaped to assist actuation of the associated key-like element, wherein the keyboard comprises a plate disposed over the touch screen display, said plate including a plurality of apertures which provide the recesses of the keyboard, each aperture registering with at least one digitising point of the digitising layer, the at least one digitising point providing the key-like element of the keyboard.

A keyboard in accordance with the invention has the advantage that it can provide a small, flexible, versatile and user-friendly user interface for use in small sized data processing devices.

In a favoured embodiment the key-like element defines the bottom surface of the recess.

In a preferred embodiment the recess is afforded using a plate with one or more apertures, disposed over the key-like elements. The advantage of this embodiment is that the plate can be removed and replaced to modify the arrangement or choice of symbols and keys of the keyboard.

In a preferred embodiment the key-like elements are in the form of digitising points of a digitising layer in, for example, a touch screen display.

Optionally the digitising layer extends outside a display layer of the touch screen display.

By making part of the plate transparent, symbols displayed beneath the plate can be viewed through the plate. This is particularly advantageous in the touch screen display application where data can be displayed beneath the plate.

In a preferred embodiment the recesses are tapered, preferably in a conical fashion, for assisting actuation of the key-like element by the stylus.

The advantage of this embodiment is that the tapering facilitates a focused actuation of a single key-like element by the stylus without the data input problems associated with virtual keyboards, such as in touch screen display devices.

Embodiments of the invention will now be described, by way of example, with reference to the accompanying drawings, in which:
Figure 1 is a cross-section of a keyboard in accordance with the invention,
Figure 2 is an example of a plate with apertures situated on top of key-like element,
Figure 3a is a cross-section of a user interface based on a touch screen display application of the invention, and
Figure 3b is the user interface of Figure 3a viewed from the front.

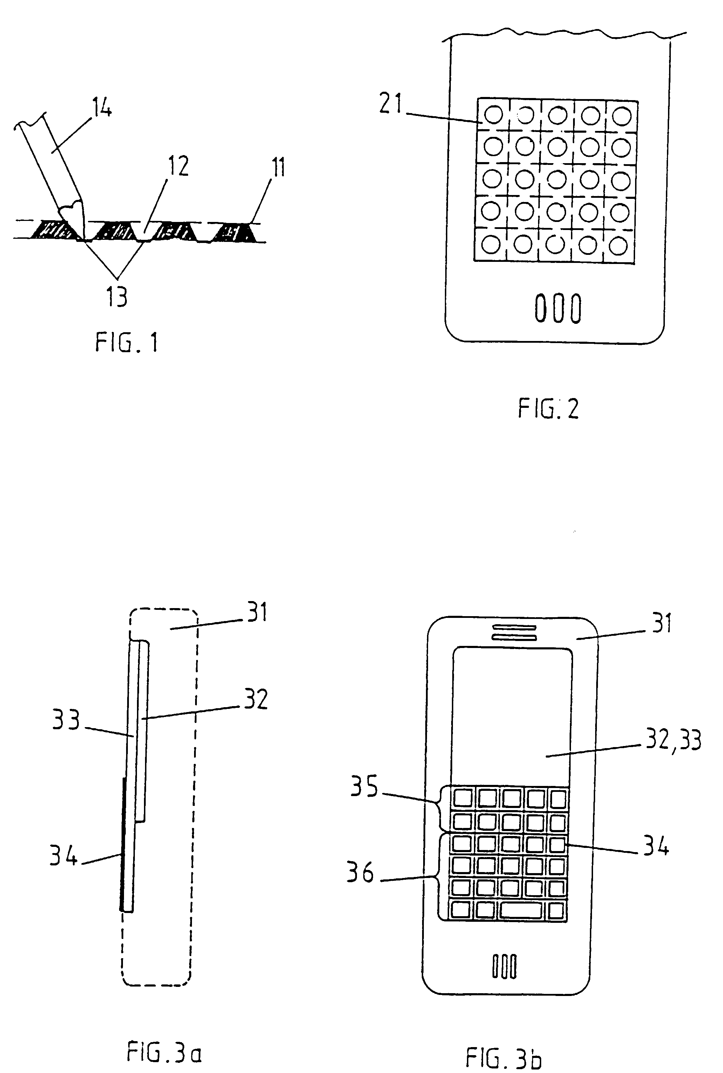

Figure 1 is a cross-section of a keyboard in accordance with the invention comprising recesses 12 on its surface 11 and key-like element 13 at the bottom of the recess. Each recess 12 and corresponding key-like element 13 preferably defines an individual key on the keyboard. The shape defined by the recess is a downward-tapering frusto-conical structure designed to aid operation with a pen 14. The wall of each recess 12 supports and guides the object used to activate the key-like element. This differs from known keyboard solutions where the keys are often raised from the surface of the device, in which difficulty is experienced in pressing, in particular small-size keys. The walls of the recess 12 prevent the tip of the pen from moving between keys thus effectively eliminating incorrect presses. The form of recess 12 is determined by the form of the pen or other object used for pressing the keys.

The key-like element can be formed in keyboards using digitising points on a touch screen display. The recesses of the keyboard can be implemented using a plate with apertures 21 placed in register with the key-like element, exemplified in Figure 2. The plate with apertures can be made of, for example, plastic, and attached permanently by gluing, or temporarily by placement, on top of the key-like elements. The symbol of each key can be marked in a suitable manner on the surface of the plate, on the inside walls of the apertures, or on the surface of the key-like element. If the keyboard is a virtual keyboard partly implemented on the touch screen display, the plate with apertures can be transparent so that the user is able to see the key symbol output on the display screen.

Figures 3a and 3b show how the invention is applied in a user interface based on a touch screen display. A mobile phone 31 is an example of a device comprising a user interface. Other details of the mobile phone are not dealt with here. The cross-section in Figure 3a shows the superimposed layers of the touch screen display, the display layer 32, and the digitising layer 33 which partly extends outside the display screen specified by the display layer 32. The input of data into device 31 is possible, over the whole area of digitising layer 33. The active touch points of digitising layer 33 can be activated using the program controlling the user interface. In the example of Figures 3a and 3b some of the active touch points of the touch screen display serve as key-like element of the keyboard, the plate with apertures 34 being placed on top of the key-like elements. In the figures the two uppermost rows of keys in the keyboard are in the area of the display screen and form the virtual part 35 of the keyboard while the rest of the keys form the fixed part 36. The keys of virtual part 35 comprise for example special characters, or keys dependent on the language used. The mode of the keys on the virtual part 35 are easy to modify by programming. The fixed part 36 would typically contain an ordinary alphanumeric keyboard.

Portions of both the virtual part 35 and the fixed part 36 in the keyboard, as well as the size and shape of the individual key-like element can be chosen according to the use of the device in which the invention is applied. In addition, unlike the examples of Figures 3a and 3b, the digitising layer 33 does not necessarily need to cover display layer 32 entirely; instead some parts of display layer 32, such as its upper portion, can be reserved for output functions alone. Data can be input either using the keyboard, its fixed or virtual part, by writing on the touch screen display. Both ways can also be combined by writing a part of the word by hand and the rest of the characters with the same pen on the keyboard.

The invention can be used to flexibly implement a small-size, user-friendly keyboard which occupies the same space, and in some cases less space, than a virtual keyboard of known pen computers. The part of the keyboard outside the display screen is always available and it does not have to be activated separately. Due to the recesses on the surface of the keyboard, the number of wrong presses is considerably less than in the pen-assisted keyboards of known pen computers. The improved accuracy in pressing makes it possible to implement the keyboard in an even smaller size.

The invention can be applied especially in small-size, portable data processing and transmitting devices such as notebook and pen computers or mobile phones.

In view of the foregoing description it will be evident to a person skilled in the art that various modifications may be made within the scope of the invention, as defined by the claims.

## Claims

1. A portable electronic device comprising:
a touch screen display with a digitising layer (33) and a display layer (32),
a keyboard for entering data into the portable electronic device, said keyboard defining a top surface (11) comprising a plurality of recesses (12), and including a key-like element (13) disposed at the bottom of each recess, which can be actuated by a stylus (14) presented into the recess, wherein the wall of each recess is shaped to assist actuation of the associated key-like element,
wherein the keyboard comprises a plate (34) disposed over the touch screen display, said plate including a plurality of apertures which provide the recesses of the keyboard, each aperture registering with at least one digitising point of the digitising layer, the at least one digitising point providing the key-like element of the keyboard.

2. A portable electronic device as claimed in claim 1, wherein the key-like element defines a bottom surface of the recess (12).

3. A portable electronic device as claimed in claim 1 or claim 2, wherein part of the plate is transparent.

4. A portable electronic device as claimed in any one of preceding claims, wherein the plate may be removed from the touch screen display.

5. A portable electronic device as claimed in any one of preceding claims, wherein the digitising layer (33) extends outside a display layer (32) of the touch screen display.

6. A portable electronic device as claimed in any one of preceding claims, wherein the wall of each recess is tapered to assist actuation of the associated key-like element.

7. A portable electronic device as claimed in claim 6, wherein the wall of each recess is tapered conically.

## Patentansprüche

1. Tragbares elektronisches Gerät, enthaltend:
- eine Sensorbildschirm-Anzeige mit einer digitalisierenden Schicht (33) und einer Anzeigeschicht (32); und
- eine Tastatur zur Eingabe von Daten in das tragbare elektronische Gerät, die eine obere Oberfläche (11) mit einer Mehrzahl von Ausnehmungen (12) definiert und ein tastenähnliches Element (13) umfaßt, das am Boden jeder Ausnehmung angeordnet und mittels eines in die Ausnehmung eingeführten Griffels (14) betätigbar ist, wobei die Wand jeder Ausnehmung geformt ist, um das Betätigen des assoziierten tastenähnlichen Elements zu unterstützen, und wobei die Tastatur eine über der Sensorbildschirm-Anzeige angeordnete Platte (34) mit einer Mehrzahl von Öffnungen enthält, die die Ausnehmungen der Tastatur bereitstellen, wobei jede Öffnung mindestens einen digitalisierenden Punkt der digitalisierenden Schicht erfäßt, und der mindestens eine digitalisierende Punkt das tastenähnliche Element der Tastatur bereitstellt.

2. Tragbares elektronisches Gerät nach Anspruch 1, bei dem das tastenähnliche Element eine Bodenfläche der Ausnehmung (12) definiert.

3. Tragbares elektronisches Gerät nach Anspruch 1 oder 2, bei dem die Platte teilweise transparent ist.

4. Tragbares elektronisches Gerät nach irgendeinem der vorangegangenen Ansprüche, bei dem die Platte von der Sensorbildschirm-Anzeige entfernbar ist.

5. Tragbares elektronisches Gerät nach irgendeinem der vorangegangenen Ansprüche, bei dem sich die digitalisierende Schicht (33) außerhalb der Anzeigeschicht (32) der Sensorbildschirm-Anzeige erstreckt.

6. Tragbares elektronisches Gerät nach irgendeinem der vorangegangenen Ansprüche, bei dem die Wand jeder Ausnehmung kegelförmig ausgebildet ist, um das Betätigen des assoziierten tastenähnlichen Elements zu unterstützen.

7. Tragbares elektronisches Gerät nach Anspruch 6, bei dem die Wand jeder Ausnehmung konisch zulaufend ausgebildet ist.

## Revendications

1. Dispositif électronique portable comprenant :
un système d'affichage par écran à touches ayant une couche de numérisation (33) et une couche d'affichage (32),
un clavier pour entre des données dans le dispositif électronique portable, ledit clavier définissant une surface supérieure (11) comprenant une pluralité d'encoches (12), et incluant un élément du type touche (13) installé au fond de chaque encoche, lequel peut être actionné par un stylet (14) présenté dans l'encoche, dans lequel la paroi de chaque encoche est formée pour aider l'actionnement de l'élément associé du type touche,
dans lequel le clavier comprend une plaque (34) disposée sur le système d'affichage par écran à touches, ladite plaque incluant une pluralité d'ouvertures qui créent les encoches du clavier, chaque ouverture indiquant au moins un point de numérisation de la couche de numérisation, au moins le point de numérisation créant l'élément de type touche du clavier.

2. Dispositif électronique portable selon la revendication 1, dans lequel l'élément de type touche définit une surface inférieure de l'encoche (12).

3. Disppositif électronique portable selon la revendication 1 ou la revendication 2, dans lequel une partie de la plaque est transparente.

4. Dispositif électronique portable selon l'une quelconque des revendications précédentes, dans lequel la plaque peut être enlevée du système d'affichage par écran à touches.

5. Dispositif électronique portable selon l'une quelconque des revendications précédentes, dans lequel la couche de numérisation (33) s'étend à l'extérieur d'une couche d'affichage (32) du système d'affichage par écran à touches.

6. Dispositif électronique portable selon l'une quelconque des revendications précédentes, dans lequel la paroi de chaque encoche est effilée pour faciliter l'actionnement de l'élément associé du type touche.

7. Dispositif électronique portable selon la revendication 6, dans lequel la paroi de chaque encoche est effilée en forme de cône.
